# DEMANDE DE BREVET EUROPEEN

(11) **EP 0 953 778 A1**
(43) Date de publication de la demande: **03.11.1999**
(21) Numéro de dépôt: 99401052.8
(22) Date de dépôt: 29.04.1999
(51) Int. Cl.: F16B 37/08, E04G 17/06

(54) **Dispositif écrou de mise en place rapide, à deux demi-écrous, et agencement de blocage notamment pour coffrage de béton, utilisant un tel dispositif écrou**

(30) Priorité: 30.04.1998 FR 9805568
(71) Demandeur: Bianchetti, Jacques, 95160 Montmorency (FR); Langlois, Jean-Louis, 77400 Thorigny/Marne (FR)
(72) Inventeur: Bianchetti, Jacques, 95160 Montmorency (FR); Langlois, Jean-Louis, 77400 Thorigny/Marne (FR)
(74) Mandataire: Berger, Helmut

(57) **Abrégé**

L'invention concerne un dispositif écrou de mise en place rapide, sur une tige filetée.

Le dispositif écrou est du type comprenant deux moitiés (13, 14) chacune en forme d'un demi-écrou, symétriques à un plan diamétral, articulées l'une à l'autre de façon pivotante autour d'un axe (19), chaque demi-écrou comportant une partie avant, dont la face interne est pourvue d'un filetage susceptible d'engréner le filetage de la tige, et une partie arrière non filetée, d'actionnement, permettant le pivotement autour dudit axe, des parties avant, à l'encontre de moyens de rappel dans la position d'engrènement. Le dispositif est caractérisé en ce que les moyens de rappel (27) sont montés sur les parties avant (15) des demi-écrous (13, 14) et sont réalisés pour constituer des moyens de maintien des demi-écrous (13, 14) à l'état assemblé.

L'invention est utilisable pour le blocage des coffrages pour béton.

## Description

L'invention concerne un dispositif écrou de mise en place rapide, sur une tige filetée, par déplacement en translation sur celle-ci, notamment pour coffrage pour béton,du type comprenant deux moitiés chacune en forme d'un demi-écrou, symétriques à un plan diamétral, articulées l'une à l'autre de façon pivotante autour d'un axe situé dans ledit plan de symétrie et s'étendant perpendiculairement à l'axe de l'écrou, chaque demi-écrou comportant une partie avant par rapport à l'axe de pivotement, dont la face interne est destinée à venir en contact avec la tige et est pourvue d'un filetage susceptible d'engréner le filetage de la tige, et une partie arrière non filetée, d'actionnement, permettant le pivotement autour dudit axe, des parties avant, entre une position rapprochée d'engrènement du filetage de la tige et une position écartée de non-engrènement de ce filetage, à l'encontre de moyens de rappel dans la position d'engrènement, ainsi qu'une rondelle de blocage de l'écrou dans sa position d'engrènement des deux demi-écrous. L'invention concerne également un agencement de blocage notamment pour coffrage pour béton, utilisant un tel dispositif écrou.

Les dispositifs écrous de ce type, de mise en place rapide, sont déjà connus. Mais, ces dispositifs présentent l'inconvénient que les écrous, en plus des deux moitiés en forme de demi-écrous, comportent des éléments supplémentaires, prévus pour assurer l'assemblage des demi-écrous lors de la mise en place et le blocage des écrous dans leur position de travail. Or, en raison de leur structure multi-pièces, ces écrous sont trop difficiles à manier et incompatibles avec certaines applications, comme par exemple sur les chantiers, et notamment des coffrages. D'autre part, les dispositifs écrous ne satisfont pas aux exigences de sécurité, aussi bien dans la phase de la mise en place des écrous que ultérieurement dans leur fonction d'éléments de blocage.

La présente invention a pour but de proposer un dispositif d'écrou qui pallie les inconvénients des dispositifs connus.

Pour atteindre ce but, le dispositif écrou est caractérisé en ce que les moyens de rappel sont montés sur les parties avant des demi-écrous et sont réalisés pour constituer des moyens de maintien des deux demi-écrous à l'état assemblé.

Selon une caractéristique de l'invention, les moyens de rappel sont formés essentiellement par un anneau élastique entourant les parties avant des deux demi-écrous.

Selon une autre particularité de l'invention, chaque partie avant d'un demi-écrou comporte une portion de rainure annulaire de réception de l'anneau de rappel et les portions de rainure des deux parties avant forment, dans la position d'engrènement des demi-écrous une rainure continue dans un plan perpendiculaire à l'axe de l'écrou.

Selon une autre caractéristique avantageuse de l'invention, les parties avant des demi-écrous sont configurées de façon à former, dans la position d'engrènement des demi-écrous, un embout cylindrique à section transversale circulaire s'engageant dans un embout tubulaire de forme complémentaire d'une rondelle d'appui.

L'agencement de blocage, notamment pour coffrage pcur béton, selon l'invention est caractérisé en ce qu'il utilise au moins un dispositif écrou susmentionné.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- La figure 1 est une vue en coupe d'un coffrage équipé d'un agencement de blocage selon la présente invention ;
- La figure 2 est une vue en perspective d'un dispositif d'écrou selon la présente invention ;
- La figure 3 est une vue en coupe axiale d'un dispositif d'écrou selon l'invention, et montre l'écrou dans sa position de mise en place rapide ;
- La figure 4 est une vue en coupe axiale d'un dispositif d'écrou selon l'invention, montrant celui-ci dans sa position de fonctionnement ;
- La figure 5 est une vue en coupe le long de la ligne v-V de la figure 4.

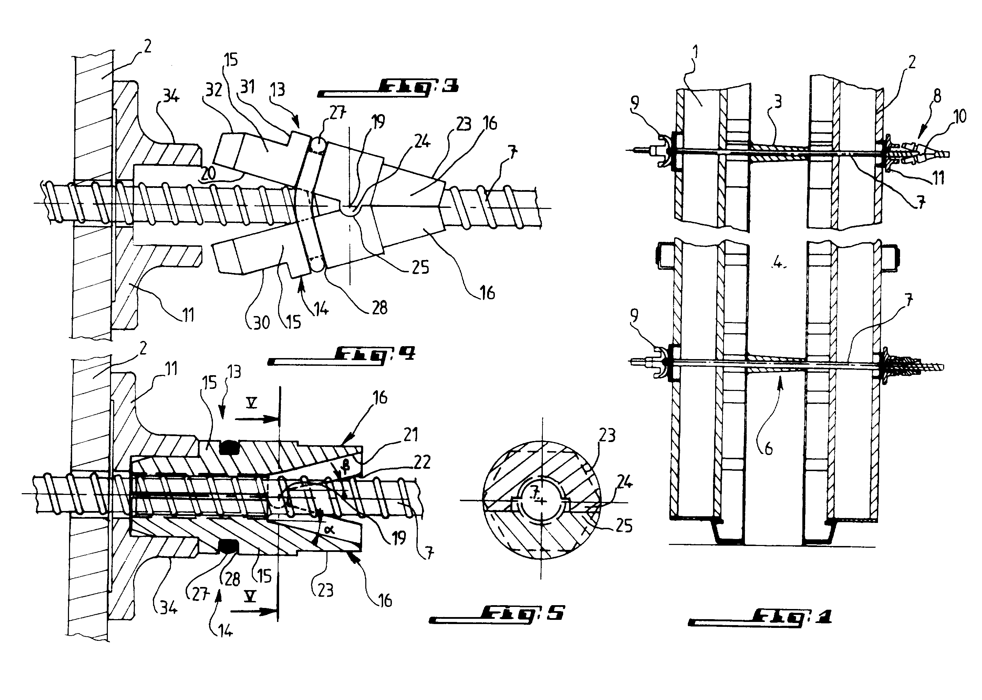

Ci-après, on décrira l'invention, à titre d'exemple non limitatif, dans son application à un coffrage pour béton tel que représenté sur la figure 1.

Ce coffrage comporte essentiellement des panneaux de coffrage 1 et 2 qui sont maintenus à une distance prédéterminée l'un de l'autre par des écarteurs 3 de façon à délimiter un espace 4 dans lequel sera coulé le béton. Les panneaux 1 et 2 sont maintenus dans leur position représentées par une pluralité d'agencements de blocage comportant chacun une tige filetée 7 traversant le coffrage et bloquant celui-ci entre un dispositif à écrou 8 selon l'invention et un écrou de butée 9.

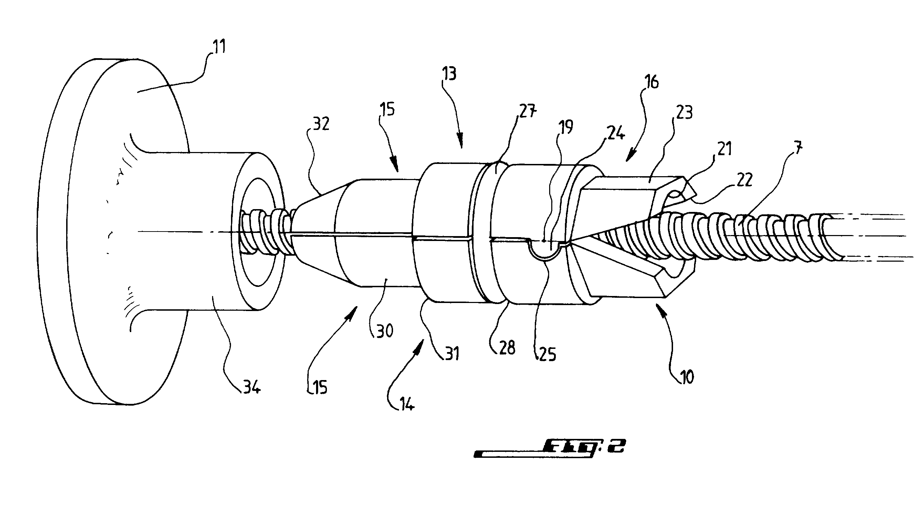

Le dispositif à écrou 8 comporte un écrou 10 et une rondelle d'appui 11. L'écrou peut être mis en place et enlevé rapidement à l'état représenté en haut sur la figure 1 et, à plus grande échelle, sur la figure 3. La figure 1 montre en bas le dispositif écrou 8, avec son écrou 10 à l'état de blocage illustré à plus grande échelle sur la figure 4. La figure 2 montre l'écrou après sa mise en place rapide dans sa position d'engrènement de la tige 7.

L'écrou 10 se compose de deux moitiés 13, 14, chacune en forme d'un demi-écrou qui sont articulées l'une à l'autre et sensiblement symétriques à un plan diamétral, à l'exception des moyens d'articulation.

Chaque moitié d'écrou 13, 14 comporte une partie avant filetée 15 et une partie arrière 16 non filetée ainsi que des moyens d'articulation situés entre les deux parties 15 et 16. L'axe d'articulation 19 autour duquel les deux moitiés sont susceptibles de pivoter se trouvent dans le plan de symétrie et s'étend perpendiculairement à l'axe de l'écrou.

Le filetage interne des deux parties avant 13, 14 est complémentaire au filetage de la tige 7. Les deux parties présentent une forme semi-cylindrique a section transversale semi-circulaire de façon que, lorsque leurs bords axiaux 20 sont en contact mutuel au niveau du plan de symétrie, elles engrènent la tige 7, comme on le voit sur les figures 2 et 4.

La face interne non filetée 21 de chaque partie de demi-écrou arrière 16 présente une section transversale en forme d'un arc de cercle dont le rayon augmente linéairement à partir de l'axe de pivotement 19. Dans la direction de l'axe de l'écrou, chaque face interne 21 présente ainsi un angle prédéterminé α. Les bords latéraux longitudinaux 22 des deux parties arrière 16 sont également inclinées, mais selon un angle β quelque peu inférieur à l'angle α.

Les faces externes périphériques 23 des parties arrières 16 des deux demi-écrous sont configurées de façon à présenter une forme à six pans pour permettre la rotation de l'écrou à l'aide d'une clé.

Les moyens d'articulation qui permettent le pivotement des deux demi-écrou 13, 14 autour de l'axe 19 comportent une protubérance semi-cylindrique à section transversale semi-circulaire 24 sur chaque extrémité interne du bord axial 20. Les deux bossages sont axialement alignés et leurs axes constituent l'axe de pivotement 19. Chaque bossage 24 s'engage dans un évidemment de forme complémentaire 25 pratiqué dans le bord en regard de la partie avant 15.

Les deux demi-écrous 13, 14 sont maintenues à l'état assemblé, avec l'engagement des protubérances 24 dans les évidements 25 par un anneau élastique de rappel 27 réalisé sous forme d'un joint torique engagé dans deux rainures semi-annulaires 28 alignées autour de la circonférence de l'écrou, chacune dans un demi-écrou, à une certaine distance de l'axe de pivotement 19 en direction de l'extrémité libre des parties avant 15. On constate encore que les deux parties avant 15 lorsqu'elles sont en contact mutuel, avec engrènement de la tige 7, forment un embout cylindrique à section transversale circulaire 30, d'un diamètre réduit, en formant un épaulement annulaire radial 31. L'embout se termine par une portion 32 se rétrécissant coniquement.

Comme on le voit sur les figures, les angles a et β sont dimensionnés de façon que les deux demi-écrou 13, 14 peuvent pivoter autour de l'axe 19 à partir de la position représentée sur les figures 2 et 4 dans laquelle l'écrou engrène la tige 7, vers la position représentée sur la figure 3, à l'encontre de l'anneau de rappel 27, dans laquelle les parties avant filetées 15 des deux demi-écrous sont écartées en dégageant le filetage de la tige 7. Dans cette position définie par le fait que les parties arrière 16 des deux demi-écrous sont en contact mutuel par leur bord incliné 22, les faces internes non filetées inclinées 21 permettent un déplacement rapide, sans rotation, de l'écrou le long de la tige, tout en assurant un effet de guidage. Les angles α et β sont dimensionnés en conséquence.

La rondelle d'appui 11 présente sur sa face opposée à celle appliquée contre le coffrage, un embout tubulaire cylindrique 34 dont la face lisse interne présente un diamètre légèrement supérieur au diamètre extérieur de l'embout 30 de l'écrou 8. La longueur axiale de l'embout 34 est légèrement supérieure à la longueur de l'embout 30. Ainsi, comme on le voit sur la figure 3, l'embout 30 peut s'engager dans l'embout de la rondelle 34, par rotation de l'écrou sur la tige 7, jusqu'à ce que l'épaulement 31 vienne en butée contre la face frontale de l'embout 34.

On comprend aisément, que, pour mettre en place l'écrou 8, il suffit de faire pivoter les deux demi-écrous dans la position représentée sur la figure 3, en serrant manuellement les deux parties arrières l'une vers l'autre, d'engager l'écrou avec les deux parties avant filetées 13, 14 écartées l'une de l'autre, sur la tige, et de faire coulisser l'écrou le long de la tige jusqu'à ce qu'elle se trouve juste en face de la rondelle d'appui 11 auparavant mise en place par simple coulissement le long de la tige 7. Puis on libère les deux parties arrière 16 de l'écrou de façon que les parties avant 15 puissent revenir à leur état d'engrènement de la tige 7 sous l'effet du joint élastique 27 comme on le voit sur la figure 2. Puis en faisant tourner l'écrou sur la tige, le cas échéant à l'aide d'une clé, on amène l'embout 30 de l'écrou à s'engager dans l'embout 34 de la rondelle Il jusqu'à ce que l'épaulement 31 bute contre la face frontale de la rondelle. En serrant l'écrou à l'aide de la clé, on assure le blocage du coffrage. Il est à noter que l'engagement de l'embout mâle 30 dans l'embout femelle 34 empêche bien entendu tout écartement des deux moitiés d'écrou.

Le dispositif écrou selon l'invention présente l'avantage majeur qu'il peut être utilisé et manié comme un écrou monopièce. En effet grâce au seul joint torique 27, les deux demi-écrous sont retenus sûrement dans leur position assemblée et ainsi ces demi-écrous se présentent et sont utilisables sous forme d'une pièce unique. Ce joint et les moyens d'articulation permettent un positionnement exact des deux demi-écrous aussi bien radialement qu'axialement. Ainsi, tout dépôt par exemple de béton entre les deux parties avant 15 est immédiatement détectable par le fait que l'embout 30 de l'écrou ne plus s'engager dans l'embout 34 de la rondelle d'appui. Tout décalage axial est détectable du fait que seulement l'épaulement 31 d'un demi-écrou est en appui contre l'embout 34 de la rondelle. Un autre avantage de l'invention réside dans le fait que le joint torique peut être configuré de façon à remplir complètement sa rainure de logement pour éviter toute pénétration de béton. De toute façon, l'élasticité du joint ferait éclater tout dépôt de béton. Par conséquent, le dispositif écrou selon l'invention est utilisable même dans des applications comme sur des chantiers, où la manipulation doit être la plus simple et sûre possible.

## Revendications

1. Dispositif écrou de mise en place rapide, sur une tige filetée, par déplacement en translation sur celle-ci, notamment dispositif écrou de blocage pour coffrage pour béton, du type comprenant deux moitiés chacune en forme d'un demi-écrou, symétriques à un plan diamétral, articulées l'une à l'autre de façon pivotante autour d'un axe situé dans ledit plan de symétrie et s'étendant perpendiculairement à l'axe de l'écrou, chaque demi-écrou comportant une partie avant par rapport à l'axe de pivotement, dont la face interne est destinée à venir en contact avec la tige et est pourvue d'un filetage susceptible d'engréner le filetage de la tige, et une partie arrière non filetée, d'actionnement, permettant le pivotement autour dudit axe, des parties avant, entre une position rapprochée d'engrènement du filetage de la tige et une position écartée de non-engrènement de ce filetage, à l'encontre de moyens de rappel dans la position d'engrènement, caractérisée en ce que les moyens de rappel (27) sont montés sur les parties avant (15) des demi-écrous (13, 14) et sont réalisés pour constituer des moyens de maintien des demi-écrous (13, 14) à l'état assemblé.

2. Dispositif écrou selon la revendication 1, caractérisé en ce que les moyens de rappel sont formés essentiellement par un anneau élastique entourant les parties avant (15) des deux demi-écrous (13, 14).

3. Dispositif écrou selon la revendication 2, caractérisé en ce que chaque partie avant (15) d'un demi-écrou (13, 14) comporte une portion de rainure annulaire (28) de réception de l'anneau de rappel et les portions de rainure des deux parties avant forment, dans la position d'engrènement des demi-écrous, une rainure continue dans un plan perpendiculaire à l'axe de l'écrou (10).

4. Dispositif écrou selon l'une des revendications 1 à 3, caractérisé en ce qu'il comprend une rondelle de blocage (11) de l'écrou (10) dans sa position d'engrènement des deux demi-écrous (13, 14) qui constitue une rondelle d'appui appliquée contre l'organe devant être bloqué.

5. Dispositif écrou selon l'une des revendications 2 à 4, caractérisé en ce que les parties avant (15) des demi-écrous (13, 14) sont configurées de façon à former, dans la position d'engrènement des demi-écrous, un embout cylindrique (30) à section transversale circulaire, s'engageant dans un embout tubulaire (34) de forme complémentaire de la rondelle d'appui (11).

6. Dispositif écrou selon l'une des revendications 1 à 5, caractérisé en ce que l'anneau de rappel (27) et sa rainure de logement (28) sont configurés de façon que l'anneau remplit complètement cette rainure.

7. Dispositif écrou selon l'une des revendications 1 à 6, caractérisé en ce que la face périphérique extérieure des parties arrière 16 des deux demi-écrous (13, 14) forment, à l'état d'engrènement de la tige (7) des demi-écrous, une face périphérique avantageusement à six pans (23) d'application d'un outil d'entraînement en rotation de l'écrou (10).

8. Dispositif écrou selon l'une des revendications 1 à 7, caractérisé en ce que les moyens d'articulation comportent, au niveau de l'extrémité interne de chaque bord axial (20) de la partie avant (15) d'un demi-écrou (13) ou (14), un bossage à profil cylindrique à section transversale semi-circulaire (24) qui s'engage dans un évidemment (25) de forme complémentaire pratiquée dans le bord axial (20) en regard de la partie avant (15) de l'autre demi-écrou (14) ou (13).

9. Dispositif écrou selon l'une des revendications 1 à 8, caractérisé en ce que la partie arrière (16) de chaque demi-écrou comporte une face interne (21) à section transversale circulaire dont le rayon augmente, à partir des moyens d'articulation en direction de l'extrémité et les bords longitudinaux (22) sont inclinés par rapport à l'axe de l'écrou de façon que, lorsque les deux demi-écrous (13, 14) sont dans leur position écartée de non-engrènement du filetage de la tige, les bords longitudinaux (22) des parties arrière (16) soient en contact mutuel et leurs faces internes (21) soient écartées légèrement de ce filetage pour permettre un déplacement guidé de l'écrou (10) sur la tige (7), sans rotation.

10. Agencement de blocage notamment pour coffrage pour béton, pourvu de deux panneaux de coffrage délimitant entre eux un espace destiné à recevoir du béton, du type comprenant une tige filetée traversant les panneaux et portant au moins sur un côté du coffrage un écrou de blocage vissé sur la tige et mis en place par déplacement axial le long de la tige à partir de l'extrémité de celle-ci, caractérisé en ce que l'écrou de blocage est réalisé sous forme d'un dispositif écrou (8) selon l'une des revendications 1 à 9.
